# EUROPEAN PATENT APPLICATION

(11) **EP 3 162 192 A1**
(43) Date of publication of application: **03.05.2017**
(21) Application number: 15020206.7
(22) Date of filing: 27.10.2015
(51) Int. Cl.: A01G 9/10

(54) **SELF-SUPPORTING PLUGS AND OTHER STRUCTURES FOR USE IN PLANT PRODUCTION**

(71) Applicant: Oxydator IVS, 8000 Aarhus C (DK)
(72) Inventor: Jensen, Martin, 9000 Aalborg (DK); Pedersen, Thomas Brorsen, 8000 Aarhus C (DK)

(57) **Abstract**

In the present invention a method for manufacturing a self-supporting structure used in germination of seeds and plants growth and a process for producing the same is presented. The self-supporting structure is obtained by mixing a growth medium with a binding agent, which is solely or mainly a fibrous material. In preferred embodiments, the fibrous embodiment is biodegradable. The invention discloses a process wherein the growth medium and the binding agent are mixed followed by shaping into the desired dimension of the self-supporting structure.

## Description

The invention relates to a plug or other structures for germination of seeds and growth of plants and to a method for manufacture of this plug or other structure.

Media for germinating seeds and growing plants is known practice, in particular in greenhouse cultivation. The germination of seeds and seedling development are commonly carried out in a plug consisting of a growth medium and possibly cohesive agents and the plug can be supported by a container. By "growth medium" it is referred to a substance in which seeds can germinate and plants can grow and it can comprise of, but is not limited to, sphagnum, compost, soil, peat, vermiculite, shredded wood, coconut fibre, blade, tissue, fertiliser and mixtures of two or more components. The seeds are sown in the plugs and as root development and plant growth proceed, the plant/seedling is transplanted into a larger growth container. During the transplanting process, the germination plug is mechanically transferred to the larger container. During the transplanting, the growth medium can disintegrate from the plug causing transplant shock to the plant/seedling. Diminishing or preferably eliminating transplant shock is beneficial as to reduce the total crop growth time.

An approach for reducing or eliminating soil falling off the roots during transplanting is to manufacture a plug containing both a growth medium and one or more binding materials. This plug must comprise an open structure similar to that of the growth medium itself as the open structure is considered important to water absorption and root propagation.

A self-supporting structure is also beneficial for larger growth container in which the plug containing the seedling can be transplanted into or in which germination can take place directly. Such larger growth container could be self-supporting and contain a growth medium.

U.S. Pat. No. 3,805,531, U.S. Pat. No. 4,175,355, U.S. Pat. No. 5,209,014 disclose cohesive plugs produced by means of adding isocynates or urethane prepolymers and a curing agent to a growth medium, which through polymerisation form a cohesive structure. Later as disclosed in US20040049980, U.S. Pat. No. 4,495,310, U.S. Pat. No. 5,791,085 plugs with a more hydrophilic polyurethane based binder is found advantageous. The use of a urethane curable as binder material in plugs used in plant cultivation provides two undesirable aspects. The first drawback is the presence of free isocyanate groups prior to the polymerisation, which constitutes a safety hazard to the persons involved in the manufacturing process of the plug. The second drawback is the slow biodegradability of polyurethane causing the plugs to be less environmentally safe compared to plugs formed from a biodegradable cohesive.

US2003140556, WO2004071176 and U.S. Pat. No. 7,866,090 describe the use of thermoplastic biodegradable binders for the manufaction of cohesive plugs for cultivation of plants. The thermoplastic material is mixed with growth medium and is heated in order to at least partly fluidise the thermoplastic material followed by a cooling step to solidify the thermoplastic binding agent and bond at least part of the binding agent to the growth medium. WO2004071176 describes heating the mixture of binding agent and growth medium to a temperature of 100 °C and in US2003140556 the binding agent is heated to about 60 °C, preferably 45° C and U.S. Pat. No. 7,866,090 states heating thermoplastic granules to 70-90 °C in order to obtain a bonding of the binding agent to the growth medium. The use of heat to at least partly fluidise the binding agent, complicates the plug manufaction production step and it causes a partial or complete sterilisation of the growth medium in the plug. Alteration of the bacterial composition of the growth medium through partial or complete sterilisation during the manufaction step of the plug might be disadvantageous for the plug as a plant cultivation medium.

When using both polyurethane and biodegradable binding agents, they are added as liquids or solid particles prior to mixing with the growth medium. In order for the binding agent to bind the growth medium into a cohesive structure, the binding agent and the growth medium should form a large interconnected network. Liquid binding agent or binding agent heated to become at least partially fluidised, flow with the open structure growth medium. The open structure of the growth medium provides it with a large surface area, which implies the possibility of a large amount of reactive sites that the binding can bind onto. The large amount of reactive sites has the disadvantage that it can consume rather large amounts of binding agent.

US2003140556 also describes the using of mixing aqueous dispersion of a binding agent, where ethylene vinyl acetate is very suitable, with the growth medium. The amount of aqueous solution relative to the amount of growth medium leads to the formation of a slurry. Said slurry is after mixing transferred to a mould and said slurry is then allowed to dry, preferably at 45 °C. The amount of ethylene vinyl acetate in said slurry is similar to the amount of growth medium, which implies a large amount of binding agent is used and this is unfavourable from a cost perspective. Further, ethylene vinyl acetate has a poor biodegradability and during the limited biodegradation process that occurs, hazardous and ozone depleting compounds can be released, which is undesirable from an ecological point of view. In another embodiments mentioned in US2003140556, fibrous material is mixed with the binding agent in order to manufacture a product with the fibrous material being on the exterior of the product to give said product an increased abrasion resistance.

In WO2013174386 a biodegradable cohesive receptacle for plant production is disclosed. Poly lactic acid is coextruded with a flexible aliphatic polyester such that the flexible aliphatic polyester covers the poly lactic acid in order to achieve a binding agent that is weldable. The binding agent is made into the shape of a sheet and is transformed into a continuous receptacle by bringing two sides of the sheet material together and weld said sides together, i.e., through applying heat to the sheet material. After forming the receptacle, it can be filled with the growth medium such that sheet made from poly lactic acid coated with the poly aliphatic ester forms the exterior of the self-supporting structure.

Poly lactic acid has also been reported useful as the main component in artificial growth medium used in plant cultivation as disclosed in US20090019765, US20110232188 and US20140259909. In the artificial growth media, the poly lactic acid comprises the entire or the majority of the growth medium in with plants can grow.

The present invention relates to a self-supporting plug for germination of seeds and plant growth consisting of a growth medium held together by at least one chemical type of fibrous material where the fibrous material constitutes an agent for binding together the various constituents of the growth medium. The fibrous material can bind the constituents of the growth medium together by means and mechanical and cohesive forces. The mechanical forces define the shape of the structure and the cohesive forces bind together the fibres and the growth medium within the structure. The fibrous material is homogeneously distributed within the growth medium meaning that the weight of fibrous material relative to the weight of growth medium in the total plug is the same as in a randomly selected small volumes of the plug. The self-supporting plug serves to reduce or eliminate transplant shock in plant cultivation and by using a fibrous binding agent, the binding agent consumption for a plug is reduced compared to prior art and the overall structure of the plug remains as close as possible to natural growth media to the benefit of seed germination and plant growth.

The invention also relates to a larger growth container consisting of the same material as the self-supporting plug. The larger growth container can have the shape of a pot and its walls and bottom consist of the same mixture of growth medium and binding agent as the plug whereas the cavity of the pot can be filled with any kind of growth medium.

The fibrous material making up the binding agent is preferably of a biodegradable type such as, but not restricted to, poly ethylene glycol, poly-ε-caprolactone, poly lactic acid, modified poly lactic acid, poly hydroxyalkanoate, hemp, flax, coconut fibres, naturally occurring fibres with examples being cotton and silk, naturally occurring fibres coated with one or more types of polymer, starch and starch based fibres, cellulose, celluose based fibres such as lyocell and viscose, fibres consisting of carbohydrate monomers, dimers or oligomers such as sucrose and co-polymer fibres of mixtures of non-biodegradable and biodegradable components or fully biodegradable components. By using a biodegradable binding agent an environmentally safe self-supporting plug or structure is obtained.

Examples of non-biodegradable fibres are polyamides, some types of polyester such as poly ethylene tetraphalate and co-polymers of non-biodegradable components. Such fibres can provide a more cost beneficial alternative to the biodegradable binding agents.

Further, the binding agent can be comprised by a fibrous material fully or partly comprised by or coated with one or more components requiring the addition of a curable to obtain the desired properties as a binding agent. The curable can bind to either the fibrous material or to the fibrous material and the growth medium and the curable can contain one or more of the following reactive chemical groups: amines, imines, carboxylic acids, thiols, and oxiranes. By using a curable a strong binding effect between the constituents of the growth medium and the binding agent can be obtained.

By "fibre" and "fibrous material" it is referred to a geometry or a material with a geometry where one dimension is significantly longer than the other or in other words a material with a high aspect ratio. For material with a cylindrical shape this implies that the length of the object is significantly long than the diameter and for rectangular objects, the length in one or two of the dimensions is significantly larger than the other dimension(s). By using a fibrous material as binding agent for the plug, a plug with an open structure similar to that of the neat growth medium is obtained.

By using the present invention it is feasible to manufacture a biodegradable, self-supporting structure at ambient temperature. The self-supporting material presented in this invention can also be manufactured in the shape of a block or mat or a self-supporting structure to which a growth medium can be added as such structure will be self-supporting and meanwhile being manufactured with a low amount of binding agent

Particularly advantageous embodiments and features of the invention are given by the dependent claims, as revealed in the following description. Further embodiments may be derived by combining the features of the various embodiments described in the following, and features of the various claim categories can be combined in any appropriate manner. Advantageously, the amount of binding agent amount is maximally 30 % by weight, more preferably maximally 15 % by weight, and most preferably maximally 10 % by weight related to the mass of the growth medium. Through this approach a self-supporting structure can be produced without using excessive binding agent.

According to various preferred embodiments of the invention, the binding agent consists of at least 50 % poly lactic acid or modified poly lactic acid, more preferably at least 70 %, most preferably at least 80 % by weight related to the weight of the binding agent as poly lactic acid and modified poly lactic acid have been found to be efficient in biding the constituents of the growth medium together.

In a preferred embodiment of the invention, the binding agent consists of fibres with a denier value below 40, more preferably below 25 as this reduces the amount of fibrous material required to obtain a self-supporting structure.

For various embodiments of the invention, dyed fibres or mixtures of dyed and non-dyed fibres are used as binding agent. A preferred dying of the fibres is to mimic the colour of the growth medium. Preferably the dye used for dying the fibres of the binding agent is biodegradable.

For alternative embodiments, the binding agent is comprised by more than 50 % by weight of a fibrous material and by less than 50 % of another binding agent that can be a liquid, slurry or solid at ambient temperature. The addition of a non-fibrous binding agent can aid the formation of the cohesive structure. The non-fibrous binding agent can consist of the same chemical components as the fibrous part of the binding agent as well as other components that chemically differ from that or those of the fibrous part of the binding agent with examples being polyurethane, poly vinyl ethylene and poly vinyl alcohol.

A self-supporting structure is obtained by mixing the growth medium with the fibrous material. After mixing the fibres and the growth medium the substance is formed into the desired shape. The shape can be a solid structure such as a plug, block or mat and structure with one or more open sides such as a pot.

In preferred embodiments of the invention, the self-supporting structure is manufactured by using growth medium and fibres present at ambient temperatures and mix the two components constituting the said structure at ambient temperature. After mixing, the mixture consisting of the growth medium and the fibrous material is shaped into the desired dimension.

In another aspect of the invention, the growth medium and the fibrous material are mixed and shaped into the desired dimension to form a self-supporting structure. Said structure is heated to a temperature between 40 and 150 °C, preferably 50-110 °C to sterilise the structure.

In an alternative embodiment of the invention, the growth medium and the binding agent are mixed and heated to a temperature between 50 and 150 °C, preferably 50-110 °C to obtain a sterilised mixture of the growth medium and the material. This sterilised mixture is then shaped into the desired dimension. For some production purposes, a sterilisation of the mixed growth medium and binding agent prior to shaping can be more cost beneficial than sterilisation of the shaped self-supporting structure.

In a further aspect of the invention, the growth medium and the fibrous material are mixed and shaped into the dimension of interest. This structure is then sterilised at ambient temperature by using for instance gamma radiation. Sterilisation through radiation can be economically better than heat treatment, especially if the growth medium or the biding agent contain water or have a high heat capacity.

According to one embodiment of the invention, the self-supporting material is manufactured by adding the growth medium and the binding agent to a container with at least one open side. The growth medium and the binding agent are mixed by hand in a kneading process followed by shaping into the desired dimension to yield a self-supporting plug.

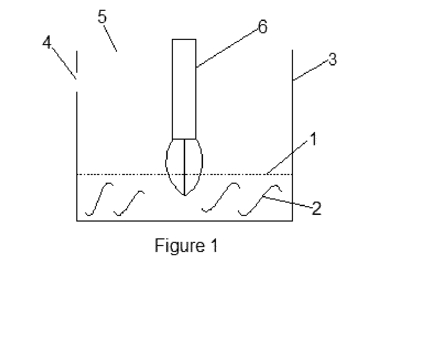

In another embodiment of the invention as shown in Figure 1, the self-supporting plug is produced by having the growth medium 1 and the binding agent 2 in a container 3 that can be completely closed or have one or more openings 4 or one or more open sides 5 or alternatively combinations hereof.
In the container one or more stirring devices 6 are positioned. The stirring device can attain various geometries and is preferably made from or coated with a material with a low surface tension such as poly tetrafluoro ethylene or silicone. The surface tension of the material used to produce the stirrer or the coating on the stirrer is preferably below 40 dyn/cm, more preferably below 35 dyn/cm to prevent adherence between the stirrer and the growth medium and binding agent. The growth medium and the binding agent are mixed by rotating the stirrer inside the container until a cohesive structure between the growth medium and the binding agent is created. Afterwards the structure obtained after mixing the growth medium and the binding agent is shaped into the desired dimension to form a self-supporting structure.

In an alternative embodiment, the growth medium and the binding agent are present in a container. Water is preferably added to the container to wet the growth medium and the binding agent and the growth medium and binding agent are mixed through jet streams or other means of introducing movement within the container as known to those skilled in the art. When the growth medium and binding agent have been adequately mixed, said mixed material is dried and formed into the desired dimension. In another embodiment, the said mixed material is formed into the desired shape followed by a drying procedure. The drying is by applying heat, pressure reduction, centrifugation or combinations hereof. The drying step is preferably preformed by means of centrifugation.

In a further embodiment of the invention, the growth medium and the binding agent are present in dry or neural humidity state in a container as the growth medium and binding might be in such states as-received. By applying pressurised air into the container through nozzles or other arrangements as know to those skilled in the art, the growth medium and the binding agent inside the container are brought into movement. Through the movement, the growth medium and the binding agent are mixed. Following the mixing, the mixed material is shaped in to the desired dimension.

## Claims

1. A self-supporting structure used for germinating seeds and plant growth and which comprises a growth medium constituted of a plurality of singular constituents, where each of the singular constituents are bonded to one or other constituents by a binding agent and where the binding agent is a fibrous material.

2. The structure according to claim 1, where in the amount of binding agent is maximally 30 % by weight related to the weight of the growth medium.

3. The structure of claim 1 wherein the binding agent is biodegradable or partly biodegradable such as, but not restricted to, poly ethylene glycol, poly-ε-caprolactone, poly lactic acid, modified poly lactic acid, poly hydroxyalkanoate, hemp, flax, coconut fibres, naturally occurring fibres with examples being cotton and silk, naturally occurring fibres coated with one or more types of polymer, starch and starch based fibres, cellulose, celluose based fibres such as lyocell and viscose, fibres consisting of carbohydrate monomers, dimers or oligomers such as sucrose and co-polymer fibres of mixtures of non-biodegradable and biodegradable components or fully biodegradable components.

4. The structure of claim 1 wherein the binding agent is dyed fibres.

5. The structure of claim 1 wherein the binding agent is a mixture of more types of fibres selected from fibres such as poly ethylene glycol, poly-ε-caprolactone, poly lactic acid, modified poly lactic acid, poly hydroxyalkanoate, hemp, flax, coconut fibres, naturally occurring fibres with examples being cotton and silk, naturally occurring fibres coated with one or more types of polymer, starch and starch based fibres, cellulose, celluose based fibres such as lyocell and viscose, fibres consisting of carbohydrate monomers, dimers or oligomers such as sucrose, co-polymer fibres of mixtures of non-biodegradable and biodegradable components or fully biodegradable components, polyamides, polyurethanes, some types of polyester such as poly ethylene tetraphalate and co-polymers of non-biodegradable components.

6. The structure according to claim 1 and 5 where the binding agent consists of at least 50 % poly lactic acid or modified poly lactic acid, more preferably at least 70 %, most preferably at least 80 % by weight related to the weight of the binding agent

7. The structure according to claim 1 and 5 wherein the binding agent completely or partly is comprised by a fibrous material fully or partly comprised by or coated with one or more components requiring the addition of a curable to obtain the desired properties as a binding agent where the curable can bind to either the fibrous material or to the fibrous material and the growth medium and the curable can contain one or more of the following reactive chemical groups: amines, imines, carboxylic acids, thiols, and oxiranes.

8. The structure according to claim 1 where the binding agent consists of fibres with a denier value below 40, more preferably below 25 as this reduces the amount of fibrous material required to obtain a self-supporting structure.

9. The structure according to claim 1 wherein the binding agent is comprised by more than 50 % by weight of a fibrous material and by less than 50 % of another binding agent that can be a liquid, slurry or solid at ambient temperature which can consist of the same chemical components as the fibrous part of the binding agent as well as other components that chemically differ from that or those of the fibrous part of the binding agent with examples being polyurethane, poly vinyl ethylene and poly vinyl alcohol.

10. A method of preparing a plug according to claim 1 where the fibrous binding agent and the growth medium are mixed followed by shaping into the shape of a structure being either a plug, mat, block, pot or similar.

11. A method of preparing a plug according to claim 10 where the fibrous binding agent and the growth medium are mixed by hand followed by shaping into the shape of a structure being either a plug, mat, block, pot or similar.

12. A method according to claim 10 wherein the mixing of the growth medium and the binding agent is carried out at a temperature between 0-50 °C, preferably 10-30 °C.

13. A method of claim 9 wherein the growth medium and the binding agent are added to a container and mixed through stirring with one or more stirrers that are made from or coated with a material with surface tension preferably below 40 dyn/cm, more preferably below 35 dyn/cm.

14. A method according to claim 9 where the growth medium and the binding agent are mixed in a wet state by applying jet streams followed by drying and shaping of the mixed growth medium and binding agent or alternatively followed by shaping and drying.

15. A method of claim 10 where the growth medium and binding agent are provided in dry or neutral humidity state and are mixed in a chamber by applying air convection through the chamber].
